(19) Europäisches Patentamt
European Patent Office
Office européen des brevets

(11) Publication number: **0 102 707**
**B1**

# (12) EUROPEAN PATENT SPECIFICATION

(45) Date of publication of patent specification: **17.09.86**

(51) Int. Cl.[4]: **C 08 F 2/16**, C 08 F 4/04

(21) Application number: **83303943.1**

(22) Date of filing: **06.07.83**

## (54) Process for production of sterically stabilised wholly non-charged aqueous polymer dispersions.

(30) Priority: **29.07.82 GB 8221894**

(43) Date of publication of application:
**14.03.84 Bulletin 84/11**

(45) Publication of the grant of the patent:
**17.09.86 Bulletin 86/38**

(84) Designated Contracting States:
**AT BE CH DE FR GB IT LI NL SE**

(56) References cited:
**EP-A-0 013 478**
**FR-A-2 240 755**
**GB-A-1 544 335**

(73) Proprietor: **IMPERIAL CHEMICAL INDUSTRIES PLC**
**Imperial Chemical House Millbank**
**London SW1P 3JF (GB)**
(73) Proprietor: **DULUX AUSTRALIA LTD**
**McNaughton Road**
**Clayton Victoria 3168 (AU)**

(72) Inventor: **Davies, Stephen Parry**
**38, Rathgael 458, St. Kilda Road**
**Melbourne, Victoria 3004 (AU)**
Inventor: **Gibson, David Vincent**
**29, Sutherland Road**
**Armadale Victoria (AU)**
Inventor: **Parr, Rodney Walter**
**13, Wilma Court**
**Doncaster Victoria (AU)**
Inventor: **Thompson, Morice William**
**"Urishay", Highfield Lane Cox Green**
**Maidenhead Berkshire (GB)**

(74) Representative: **Johnston, Walter Paul et al**
**Imperial Chemical Industries PLC Legal**
**Department: Patents PO Box 6**
**Welwyn Garden City Herts, AL7 1HD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 102 707 B1

**Description**

This invention relates to the preparation of dispersions in aqueous media of polymers derived from ethylenically unsaturated monomers, more particularly to a method of preparing such dispersions which avoids the use of ionisable species as polymerisation initiator, as emulsifier for the monomer or as stabiliser for the polymer disperse phase, and which results in the production of a dispersion in which the stabilisation of the disperse phase is wholly steric in character.

The so-called aqueous emulsion polymerisation of ethylenically unsaturated monomers is a very well known process. It is somewhat misleadingly named inasmuch as, although the bulk of the monomer which is to be polymerised exists initially as droplets emulsified in the aqueous medium employed, the actual polymerisation initially takes place not within those droplets but within the aqueous medium, in which a significant concentration of dissolved monomer is maintained throughout the process. For this reason, the technique is not applicable to monomers which have a negligible solubility in water. Arising from this, the process calls for the presence, firstly, of a surfactant dissolved in the aqueous medium whereby the emulsified droplets of monomer are stabilised whilst in effect constituting a reservoir from which monomer in solution in the aqueous medium is replenished as polymerisation proceeds; secondly, it requires the presence of a free-radical type polymerisation initiator which is soluble in the aqueous medium, in order to bring about polymerisation of the dissolved monomer rather than of the emulsified material. It has become customary to use ionisable compounds for both of these functions. Thus there are commonly used as surfactants such anionic substances as sodium dodecylbenzenesulphonate, sodium dioctylsulphosuccinate and the alkali metal or ammonium salts of sulphonated fatty alcohols, and as polymerisation initiators water-soluble per-compounds such as ammonium persulphate or potassium persulphate. In the resulting dispersions, the polymer particles of the disperse phase are stabilised against gross flocculation or aggregation by the presence on their surfaces of electrically charged species derived from these ionisable surfactants and/or initiators. This stability of the disperse phase is, however, rather readily disturbed by external influences to which the dispersions may be subjected, in particular by shear forces, by the introduction of polyvalent ions, by freeze-thaw conditions or by pH changes.

It has already been proposed, in British Patent Specification No. 1,196,247, to prepare aqueous dispersions of synthetic polymers in which the polymer particles are stabilised against gross flocculation by a different, steric mechanism, namely by means of the presence in the dispersion of an amphipathic polymeric stabiliser which has the ability to form around each particle a protective barrier of polymer chains which are solvated by the aqueous medium. By this procedure, the presence on the polymer particles of charged species derived from a conventional ionic surfactant is avoided, but no emphasis is placed in the above-mentioned specification upon the desirability of avoiding also the use of ionic initiators and indeed the use of such materials as ammonium persulphate or potassium persulphate is proposed.

There has also previously been described, in British Patent Specification No. 1,544,335, a process for polymerising an ethylenically unsaturated monomer in water in the presence of a catalyst and also in the presence of a block copolymer dispersion stabiliser which contains at least two polymeric blocks of which one is hydrophilic and the other is hydrophobic, the hydrophilic blocks serving to provide a stabilising barrier around the polymer particles. Here again the introduction of charged species by the use of a conventional surfactant is avoided, but there is no reference to the desirability of using non-ionic initiators and the initiators described as being suitable include a number of the ionic type.

In our European Application No. 83302507.5 we described a method of making wholly non-charged stable aqueous dispersions of synthetic addition polymers, which involves combining the steric mode of polymer stabilisation mentioned above with the use of non-ionic free radical polymerisation initiators which are characterised by being soluble in the aqueous phase but substantially insoluble in the monomer phase. More specifically, in the said method, at least one ethylenically unsaturated monomer, having a solubility in water in the range 0.08%—8% by weight but giving rise to a polymer which is insoluble in water, is emulsified in water and is subjected in that state to polymerisation in the presence of (a) a non-ionisable free-radical organic azo polymerisation initiator which soluble and is substantially insoluble in the monomer or monomers and (b) an amphipathic steric stabiliser for the polymer particles produced which is a block or graft copolymer containing in the molecule a polymeric component of one type which has a molecular weight of at least 700 and is solvatable by the aqueous phase, and a polymeric component of another type which has a molecular weight of at least 700 and is not solvatable by the aqueous phase and is capable of becoming associated with the said polymer particles.

Further, in the said Applications, we have referred to the desirability in many cases of including in the polymerisation mixture a non-ionic surfactant whereby the emulsification of the monomer in the water may be assisted. We have also referred therein to the possibility of the block or graft copolymer stabiliser being generated *in situ* during the polymerisation from a precursor compound containing in the molecule a polymer chain which is *per se* soluble in the aqueous phase and also containing an unsaturated grouping capable of copolymerising with the monomer being polymerised.

We have now found that the functions of the non-ionic surfactant and of the copolymerisable precursor compound may be with advantage be combined in a single substance.

Thus according to the present invention there is provided a polymerisation process in which (i) at least one ethylenically unsaturated monomer, having a solubility in water in the range 0.08—8% by weight but

giving rise to a polymer which is insoluble in water, is emulsified in water in the presence of a non-ionic surface-active compound which comprises in the molecule (a) a component of molecular weight at least 400 which is *per se* soluble in the aqueous phase, (b) another component of molecular weight in the range 150—1000 which is *per se* soluble in the monomer phase and (c) an unsaturated grouping which is capable of copolymerising with the monomer or monomers, the said grouping being attached to or integral with the monomer-soluble component aforementioned, and (ii) the emulsified monomer is then subjected to polymerisation in the additional presence of a non-ionisable free radical-type organic azo polymerisation initiator which is soluble in water and substantially insoluble in the monomer or monomers.

Ethylenically unsaturated monomers which may be polymerised by the process of the invention include, for example, acrylic monomers such as methyl methacrylate, ethyl methacrylate, butyl methacrylate, methoxypropyl methacrylate, cyclohexyl methacrylate, benzyl methacrylate, hydroxyethyl methacrylate, hydroxypropyl methacrylate, dimethylaminoethyl methacrylate, ethyl acrylate, butyl acrylate, hydroxybutyl acrylate, N-butoxymethyl acrylamide, N-butoxymethyl methacrylamide, glycidyl acrylate and glycidyl methacrylate, vinyl monomers such as vinyl acetate, vinyl propionate, styrene, vinyl toluene, methoxystyrene and vinyl pyridine, and halogenated vinyl monomers such as vinyl chloride and vinylidene chloride. All these monomers exhibit the required minimum solubility in water. There may, if desired, be used together with one or more of such monomers a minor proportion of a monomer having an insignificant solubility in water, for example 2-ethylhexyl acrylate or stearyl methacrylate, which would not be polymerisable on its own by the aqueous emulsion procedure.

The monomers to be polymerised may also include monomers which are polyfunctional with respect to the polymerisation reaction, whereby the particles in the resulting aqueous dispersion will consist of crosslinked polymer. Suitable polyfunctional monomers include, for example, allyl methacrylate, ethylene glycol dimethacrylate, hexanediol diacrylate, trimethylolpropane triacrylate and divinylbenzene.

The first step in the process of the invention is the emulsification of the monomer or monomers to be polymerised in the aqueous phase of the polymerisation mixture which consists at least of water and the surface-active compound as defined. The role of the surface-active compound at this stage is to assist in the production and maintenance of a monomer emulsion of a sufficient degree of fineness but, as already indicated and discussed in more detail below, it also serves as a precursor for the formation of a steric stabiliser whereby the resulting polymer is stabilised in aqueous dispersion. If desired, the emulsification of the monomer may be expediated by subjecting the polymerisation mixture to high-shear or ultrasonic treatment, but normally a conventional stirring action in the presence of the surface-active component will suffice.

As defined above, the surface-active compound comprises in the molecule three structural features. Firstly, there is present a component of molecular weight at least 400, preferably at least 1000, which is *per se* soluble in the aqueous phase of the polymerisation mixture; in other words this component, if it were not attached to the rest of the precursor molecule, would actually be soluble in the aqueous phase. Suitable such components include in particular those derived from polyethylene glycols, or their monomethyl ethers, of molecular weight in the range 2000—4000, but there may also be used those derived from poly(ethyleneoxide)-poly(propyleneoxide) copolymers containing at least 40% of ethylene oxide and their monomethyl ethers, polyvinylpyrrolidone, polyacrylamide, polymethacrylamide, polyvinyl alcohol and poly [bis(hydroxyethyl)methacrylamide].

Secondly, the surface-active compound incorporates a component of molecular weight in the range 150—1000 which is *per se* soluble in the monomer phase of the polymerisation mixture; thus, whereas the first-mentioned component is hydrophilic in character, this second component is of a hydrophobic nature. Suitable such components include chains derived from the self condensation or co-condensation of propylene oxide, butylene oxide or styrene oxide, or hydrocarbon chains such as that derived from a higher fatty acid or fatty alcohol. These first and second components together confer the surface-active properties on the compound which are required for emulsification of the monomer or monomers. Preferably the first, or hydrophilic, component and the second, or hydrophobic, component should be present in a weight ratio lying in the range from 20:1 to 1:1. The third feature of the surface-active compound, which is attached to or is integral with the second or hydrophobic component, is an unsaturated grouping capable of copolymerising with the monomer or monomers being polymerised. Preferably the unsaturated grouping is attached to or is integral with the portion of the hydrophobic or monomer phase-soluble component which is most remote from the hydrophilic or aqueous phase-soluble component. Where the hydrophobic component is a polymer chain containing a hydroxyl group, for example a poly(oxybutylene) chain terminated by such a group, the unsaturated grouping may conveniently take the form of the ester of the component in question with a copolymerisable unsaturated acid, such as methacrylic acid, itaconic acid or maleic acid. The production of such an ester may consist in carrying out an ester-interchange reaction between a lower alkyl ester of the acid, for example methyl methacrylate, and the compound constituting the remainder of the precursor molecule, e.g. the monomethyl ether of a poly (oxyethylene)-poly(oxybutylene) copolymer. Such an ester may also be obtained by reacting the copolymer with a suitable unsaturated acid chloride, e.g. methacrylyl chloride, in the presence of a hydrogen chloride acceptor.

One example of a suitable surface-active compound for use in the process of the invention is the unsaturated block copolymer of the formula:—

$$CH_3O(C_2H_4O)_x(C_4H_8O)_yCO.\overset{\displaystyle CH_3}{\overset{|}{C}}=CH_2$$

where x and y have values corresponding to molecular weight for the poly(oxyethylene) and poly(oxybutylene) blocks of 2000 and 700 respectively. This substance is readily obtained by condensing methanol with ethylene oxide and subsequently with butylene oxide in the requisite proportions, and then reacting the product with methacrylyl chloride, or carrying out an ester interchange reaction between the product and methyl methacrylate in the presence of a catalytic amount of tetra-isopropyl titanate.

Alternatively, a suitable surface-active compound may be obtained by the successive condensation of, for example, butylene oxide and ethylene oxide with a hydroxylic compound already containing the requisite copolymerisable unsaturated grouping. For example, allyl alcohol may be condensed successively with butylene oxide and with ethylene oxide to give a block copolymer of the formula:

$$CH_2=CH.CH_2.O(C_4H_8O)_y(C_2H_4O)_xH$$

where x and y have the same values as above. As another example, the triallyl ether of pentaerythritol may be condensed successively with 2 molar proportions of butylene oxide and 35 molar proportions of ethylene oxide.

As a further alternative, the hydrophobic component of the surface-active compound may be provided by a hydrocarbon chain, which may also incorporate the unsaturated grouping. An example of such a chain is that in undecylenic acid, and this may be converted to the required surfactant/precursor by direct condensation with ethylene oxide, for example in a molar ratio of 1:35.

The amount of the surface-active compound which is used in the process will depend to some extent upon the particular monomer or monomers to be emulsified and the fineness of the emulsion which is desired, as well as upon the efficiency of the particular compound used. However, the optimum proportion can readily be found in any individual case by simple experiment. Typical proportions are in the range 1% to 20%, more especially 5% to 10%, by weight of the monomer taken.

The polymerisation of the monomer or monomers thus emulsified requires the presence in the reaction mixture of an organic azo compound which is capable of decomposing on heating to give free radicals, is free from ionisable or charged groups and incapable of giving rise to ionic or charged species during the polymerisation reaction, and is preferentially water-soluble in the sense that, whilst it may not be completely insoluble in the monomer or monomers being polymerised when water is absent, it is overwhelmingly present in the aqueous phase of the polymerisation mixture. Preferred initiators are those which exhibit a distribution ratio between water and pure styrene of at least 12, and more preferably of at least 20.

Classes of organic azo compounds containing in the molecule water-solubilising groups which are suitable for use in the process include the following:—

(i) Compounds satisfying the foregoing distribution ratio requirement and having the general formula

$$\left[=N-\underset{\displaystyle R_2}{\underset{|}{\overset{\displaystyle CN}{\overset{|}{C}}}}\ \ CH_2CH_2CO.X.CH_2\overset{\displaystyle R_1}{\overset{|}{C}}H.OR\right]_2 \qquad (I)$$

in which R and $R_1$ are independently hydrogen or a methyl group, $R_2$ is an alkyl group containing from 1 to 4 carbon atoms, and X is oxygen or a group $-NR_3$ where $R_3$ is hydrogen or a grouping

$$-CH_2\overset{\displaystyle R_1}{\overset{|}{C}}H.OR.$$

The compounds in question are thus either esters or substituted amides of an azobiscarboxylic acid. Examples of suitable initiators of this class include the bis(diethanolamide) of 4,4'-azobis(cyanopentanoic acid), having the formula

$$\left[=N-\underset{\displaystyle CH_3}{\underset{|}{\overset{\displaystyle CN}{\overset{|}{C}}}}-CH_2CH_2CO.N\begin{matrix}\diagup CH_2CH_2OH\\ \diagdown CH_2CH_2OH\end{matrix}\right]_2$$

and having a distribution ratio between water and styrene of 463, and the corresponding bis(diisopropanolamide) having the formula

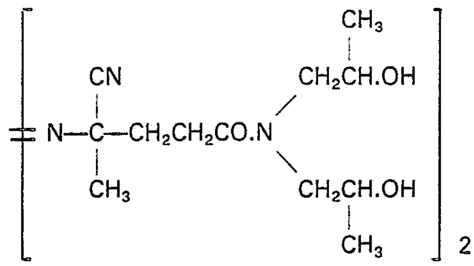

and having a distribution ratio between water and styrene of 23.

The corresponding bis(ethanolamide is not suitable for use in the process, it having a distribution ratio of about 10.

The above compounds may be prepared by reacting the appropriate azobiscarboxylic acid halide with the appropriate hydroxy or amino compound in known manner in the presence of a hydrogen halide acceptor.

(ii) Compounds satisfying the foregoing distribution ratio requirement and having the general formula

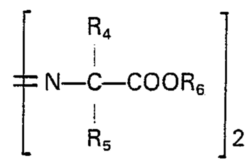

(II)

where $R_4$ is a methyl group, $R_5$ is a methyl or ethyl group, or $R_4$ and $R_5$ together with the intermediate carbon atom form a cyclohexyl group, and $R_6$ is the residue of a monohydroxy compound.

Examples of suitable initiators of this class include the bis-esters of 2,2'-azobis(2-methylpropanoic acid) with octanol and with 2-ethoxyethanol.

These esters may be prepared by way of the Pinner reaction in which, for example, 2,2'-azobis(2-methylpropionitrile) is reacted under anhydrous conditions with an excess of the appropriate hydroxy compound in the presence of hydrogen chloride to form an imino-ether; this intermediate product is then hydrolysed to give the corresponding carboxylic ester. There may with advantage be employed in the making of such compounds the modification of the Pinner reaction which is described in our European Application No. 82305791.4. In this modification, the hydroxy compound is required to be used in stoichiometric proportion only, in the presence of a compound containing an ether grouping.

(iii) Compounds satisfying the foregoing distribution ratio requirement and having the general formula

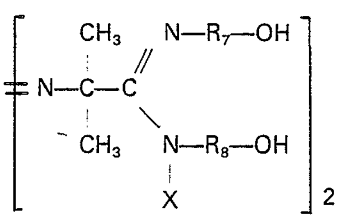

(III)

where $R_7$ and $R_8$ are linear or branched alkylene residues of 2—4 carbon atoms and X is hydrogen or a grouping $R_8$—OH. These compounds are described in German Offenlegungsschrift 2841033 and European Patent Application No. 0009186 A1, and may be obtained by reacting an iminoether, derived from azobis(2-methylpropionitrile) by the Pinner reaction, with a mono- or di-alkanolamine and optionally (where a monoalkanolamine has been used) further reacting the product with an alkylene oxide.

(iv) Compounds satisfying the foregoing distribution ratio requirement and having the general formula

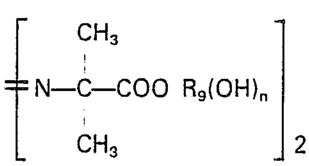

(IV)

where $R_9$ is the residue of an aliphatic polyhydroxy compound $R_9(OH)_{n+1}$ after removal of one hydroxyl group therefrom and n has the value 2 or 4. Examples of suitable initiators of this class include the bis (1,2-dihydroxypropyl) ester of 2,2'-azobis(2-methylpropanoic acid) and the bis-(5,6-dihydroxyhexyl) ester of the same acid.

These esters may be prepared by the method described in our European Application No. 83301855.9 which consists in reacting 2,2'-azobis(2-methylpropionitrile) with a stoichiometric amount of an acetal or ketal derivative of the formula

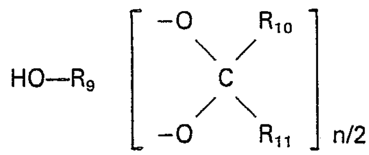

(IVa)

where $R_9$ and n have their previous significance, $R_{10}$ is hydrogen or an alkyl or aryl group and $R_{11}$ is an alkyl or aryl group, or $R_{10}$ and $R_{11}$ together with the intermediate carbon atom form a cycloalkyl group, in the presence of hydrogen chloride gas under anhydrous conditions, followed by hydrolysis of the intermediate iminoether hydrochloride and of the acetal or ketal grouping or groupings.

(v) Compounds satisfying the foregoing distribution ratio requirement and having the general formula

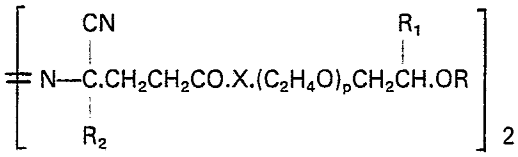

(V)

in which R, $R_1$ and $R_2$ have the same significance as in formula (I) above, X is oxygen or a group —NH— and p is an integer from 10 to 100, preferably from 20 to 50.

The compounds in question are thus either esters or substituted amides of an azobiscarboxylic acid and they contain poly(oxyethylene) groups and in some cases also hydroxyl groups. An example of a suitable initiator of this class is the bis-amide of 4,4'-azobis(cyanopentanoic acid) and α-amino-ω-hydroxy-poly(oxyethylene) of mol.wt. 1600, having the formula

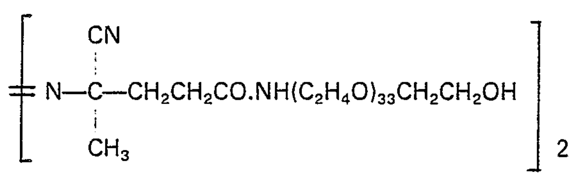

The preparation of this compound from the aminohydroxy compound and the corresponding acid chloride, and of related compounds, is described in European Application No. 83300647.1.

(vi) Compounds satisfying the foregoing distribution ratio requirement and having the general formula

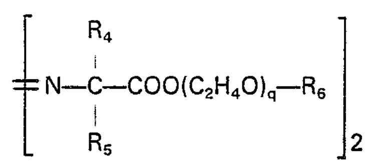

(VI)

wherein $R_4$, $R_5$ and $R_6$ have the same significance as in formula (II) above and q is an integer from 10 to 100, preferably from 20 to 50.

An example of a suitable initiator of this class is the bis-ester of the monomethyl ether of polyethylene glycol, mol. wt. 2000, and 2,2'-azobis-(2-methylpropanoic acid) having the formula

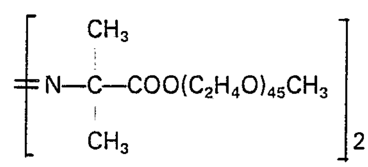

This compound is further described in European Application No. 82305792.2 and its preparation from stoichiometric proportions of 2,2'-azobis(2-methylpropionitrile) and the monomethyl ether of polyethylene glycol, via the corresponding bis(iminoether), is described in European Application No. 82305791.4.

(vii) Compounds satisfying the foregoing distribution ratio requirement and having the general formula

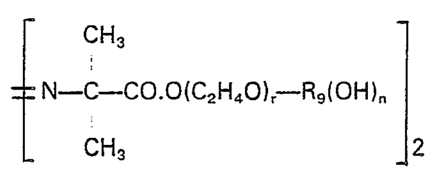

(VII)

where $R_9$ and n have the same significance as in formula (IV) above and r is an integer from 10 to 100, preferably from 20 to 50.

Examples of suitable initiators of this class include the esters of 2,2'-azobis(2-methylpropanoic acid) with 1-(poly-(ethyleneoxy))-glycerol containing 30(ethyleneoxy) units and with the condensate of 1 mole of D-glucofuranose with 24 moles of ethylene oxide. The preparation of these compounds is described in our European Application No. 83301855.9 already referred to.

The azo initiator may if desired be added to the polymerisation mixture when emulsification of the monomer or monomers is complete, but usually it will be found more convenient to add it, along with the surface-active compound, at the beginning of the process.

The proportion of the water-soluble azo initiator which is used may vary considerably according to the particular monomers which are being polymerised and the rate at which it is desired the polymerisation should proceed, and the optimum amount may readily be ascertained by simple experiment. Typically, however, the initiator is used in an amount ranging from 0.1 mol % to 3.0 mol %, based on the amount of monomer.

As already indicated, the steric stabilisation of the polymer particles produced in the polymerisation is achieved by means of an amphipathic copolymer which is generated *in situ* during the process. The precursor of this stabiliser is the surface-active compound which acts initially as the monomer emulsifier, its role at this later stage depending upon the presence in its molecule of the unsaturated grouping. This grouping enables it to copolymerise with some of the monomer or monomers being polymerised, resulting in the formation of a further polymeric component which is inherently non-solvatable by the aqueous phase of the polymerisation mixture and consequently becomes associated with the polymer of the disperse phase. The actual stabilising entities are the hydrophilic chains present in the copolymer and derived from the surface-active precursor which are solvated by the aqueous phase and as a result take up a chain-extended configuration, whereby a steric barrier is formed around the polymer particles.

There may also be present during the polymerisation process a chain transfer agent which, like the initiator, is soluble in the aqueous medium. An example of a suitable agent is thioglycollic acid. The chain transfer agent may be used in an amount of from 0.1% to 2% of the weight of monomer. The effect of the chain transfer agent is to regulate the molecular weight of the disperse polymer and ultimately to reduce the proportion of finer particles in the disperse phase, thus increasing the average particle size.

In carrying out the process of the invention, it is possible to introduce the whole of the monomer or monomers to be polymerised into the aqueous medium all at once; this may conveniently be described as a "one-shot" procedure. As already indicated, this monomer becomes emulsified in the aqueous medium and provides a reservoir from which monomer is gradually drawn as polymerisation proceeds until all of it has converted to disperse polymer. An alternative, and preferred, procedure is to add initially to the aqueous medium part of the monomer only, this being emulsified and allowed to polymerise to form a dispersion of fine "seed" polymer particles, after which the remainder of the monomer is gradually added, with resulting growth of the particles. This may be referred to as a "seed and feed" process; its chief advantage is that it enables better control of the particle size of the polymer dispersion to be achieved.

The process may be carried out over a wide range of temperatures, depending on the particular monomer or monomers being polymerised, the particular initiator employed and the rate of polymerisation desired; it is in addition important that the temperature employed should not be so high that the solvatable component of the stabiliser ceases to be effectively solvated by the aqueous phase. In general, however, the polymerisation temperature will lie in the range 50—100°C, preferably 50—80°C.

In general, the polymerisation process is carried out following the operational procedures and employing the equipment (e.g. reaction vessel and stirrer configuration) which are well established in the emulsion polymerisation field and which are known to those skilled in the art.

The aqueous polymer dispersions obtained by the process of the invention are useful *inter alia*, for the formulation of water-borne coating compositions having superior properties attributable to the wholly steric mode of stabilisation of the dispersions.

The invention is illustrated but not limited by the following Examples, in which percentages are by weight. The polymer latices obtained were subjected to determination of particle size and distribution by means of the "Nanosizer" (Registered Trade Mark), an instrument marketed in the U.K. by Coulter Electronics Limited. The results of this determination are expressed by two numbers, e.g. 3:361; the first number is a measure of the degree of polydispersity of the latex particles on an arbitrary scale from 0 (monodisperse) to 10, and the second number is the average size of the particle in nanometres.

Example 1

In this Example, the surface-active compound which also functions as precursor for the polymer stabiliser formed *in situ* had the following structure:

$$CH_3O(C_2H_4O)_x(C_4H_8O)_yCO.\overset{CH_3}{\overset{|}{C}}=CH_2$$

in which the value of x corresponds to a poly(ethyleneoxide) chain molecular weight of about 2000 and the value of y corresponds to a poly(butylene oxide) chain molecular weight of about 700.

The above-identified surfactant/precursor (4.5g) was dissolved in deionised water (300g) in a 2-litre

"culture vessel" (that is to say, a reaction vessel having a flat bottom and vertical sides) fitted with a nitrogen inlet, a condenser, an anchor-type stirrer with baffle bar and separate feed lines for monomer and initiator. To the aqueous solution were added methyl methacrylate (13g) and butyl acrylate (10g) together with the bis(diethanolamide) of 4,4'-azobis(cyanopentanoic acid) as initiator (1.0g). The mixture was heated with stirring under nitrogen at about 80°C for 1½ hours, to give a "seed" polymer latex for which "Nanosizer" examination gave a result of 4:63. With stirring and heating at 80°C continued, a first monomer feed consisting of methyl methacrylate (65g), butyl acrylate (50g) and the surfactant/precursor (8.4g) was added over 3½ hours, with simultaneous addition of further initiator (8.0g) dissolved in deionised water. At the end of this period, the latex obtained had a solids content of 18.9% and "Nanosizer" examination gave the result 5:117. The latex was kept at room temperature for about 50 hours, then re-heated with stirring to 80°C and a second monomer feed consisting of methyl methacrylate (26g), butyl acrylate (20g) and a surfactant/precursor (1.8g) was added over 2 hours, accompanied by initiator (3.0g) dissolved in deionised water. The "Nanosizer" reading on the latex was then 6:139. Finally, a third monomer feed consisting of methyl methacrylate (60g), butyl acrylate (45g) and surfactant/precursor (8.4g) was added under the same conditions as before, together with initiator (3.0g) dissolved in dionised water. The copolymer latex thus obtained was filtered through nylon mesh; it had a solids content of 36% and "Nanosizer" determination gave the result 4:142.

Example 2

In this Example, the surfactant/precursor used was the product of reaction of allyl alcohol (1 mol) successively with styrene oxide (1 mol), butylene oxide (1 mol) and ethylene oxide (35 mols) respectively.

A mixture of deionised water (100g), the above surfactant/precursor (2g), vinyl acetate (20g) and the bis(diethanolamide) of 4,4'-azobis(cyanopentanoic acid) (0.5g) was stirred (magnetic stirrer) and heated in a 250 ml round-bottomed flask under a nitrogen atmosphere at 80°C for 6 hours. At the end of this time, the conversion of monomer to polymer was 91% and "Nanosizer" examination of the resulting latex gave the values 4:229. Some settlement of the disperse phase occurred on standing.

Example 3

The surfactant/precursor used in this Example was the product of reaction of pentaerythritol triallyl ether (1 mol) successively with butylene oxide (2 mols) and ethylene oxide (35 mols).

The apparatus and procedure employed were those described in Example 1. Details of the reaction mixtures at the "seed' and "feed' stages are as follows:

| | |
|---|---|
| "Seed" stage | |
| Deionised water | 200g |
| Surfactant/precursor | 4.48g |
| Methyl methacrylate | 9.6g |
| Butyl acrylate | 8.3g |
| Initiator* in deionised water | 5g |
| Polymerisation temperature | 70°C |
| Polymerisation time | 1 hour |
| "Nanosizer" determination on "seed' latex | 1:103 |
| First "feed" stage | |
| Methyl methacrylate | 69.8g |
| Butyl acrylate | 60.8g |
| Hydroxisopropyl methacrylate | 16.8g |
| Surfactant/precursor | 14.7g |
| Polymerisation temperature | 70°C |
| Polymerisation time | 3½ hours |

*During the progress of both this first feed stage and the second feed stage described below, aliquots were added every 10 minutes of a solution of initiator (4.4g) in deionised water (20g). The initiator used throughout this Example was the bis(diethanolamide) of 4,4'-azobis(cyanopentanoic acid).

"Nanosizer" determination at the end of the first feed stage gave the result 1:162.

Second "feed" stage

| | |
|---|---|
| Methyl methacrylate | 17.2g |
| Butyl acrylate | 14.2g |
| Hydroxyisopropyl methacrylate | 3.6g |
| Surfactant/precursor | 1.75g |
| Polymerisation temperature | 70°C |
| Polymerisation time | ¾hour |

The overall conversion of monomer to polymer was 99.8%. After removal of about 16g of coagulated matter, the latex finally obtained gave a "Nanosizer" result of 1:192.

Example 4

The surfactant/precursor used in this Example was similar to that used in Example 3, but the molar quantities of butylene oxide and ethylene oxide were 4 and 46 respectively.

The procedure and quantities of materials were otherwise the same as in Example 3. The overall conversion of monomer to polymer was 97%; about 15g of coagulum were separated from the latex finally obtained. The results of "Nanosizer" determination were as follows:—

| | |
|---|---|
| After "seed" stage | 5:82 |
| After first "feed" stage | 2:109 |
| Final stage | 3:159 |

**Claims**

1. A process for the preparation of the sterically stabilised aqueous polymer dispersion, in which (i) at least one ethylenically unsaturated monomer, having a solubility in water in the range 0.08—8% by weight but giving rise to a polymer which is insoluble in water, is emulsified in water in the presence of a non-ionic surface-active compound which comprises in the molecule (a) a component of molecular weight at least 400 which is *per se* soluble in the aqueous phase, (b) another component of molecular weight in the range 150—1000 which is *per se* soluble in the monomer phase and (c) an unsaturated grouping which is capable of copolymerising with the monomer or monomers, the said grouping being attached to or integral with the monomer-soluble component aforementioned, and (ii) the emulsified monomer is then subjected to polymerisation in the additional presence of a non-ionisable free radical-type organic azo polymerisation initiator which is soluble in water and substantially insoluble in the monomer or monomers.

2. A process as claimed in claim 1, wherein the aqueous phase-soluble component of the surface-active compound is derived from a polyethylene glycol, or a monomethyl ether thereof, of molecular weight in the range 2000—4000.

3. A process as claimed in claim 1 or claim 2, wherein the weight ratio in the surface-active compound of the aqueous phase-soluble component to the monomer phase-soluble component is in the range 20:1 to 1:1.

4. A process as claimed in any one of claims 1 to 3, wherein the surface-active compound is a block copolymer of the formula:—

$$CH_3O(C_2H_4O)_x(C_4H_8O)_yCO.\overset{\overset{\displaystyle CH_3}{|}}{C}{=}CH_2$$

where x and y have values corresponding to poly(oxyethylene) and poly(oxybutylene) block molecular weights of 2000 and 700 respectively.

5. A process as claimed in any one of claims 1 to 3, wherein the surface-active compound is a block copolymer of the formula:—

$$CH_2{=}CH.CH_2O(C_4H_8O)_y(C_2H_4O)_xH$$

where x and y have values corresponding to poly(oxyethylene and poly(oxybutylene) block molecular weights of 2000 and 700 respectively.

6. A process as claimed in any one of claims 1 to 3, wherein the surface-active compound is the product of the successive condensation of 1 mole of the triallylether of pentaerythritol with 2 moles of butylene oxide and 35 moles of ethylene oxide.

7. A process as claimed in any one of claims 1 to 6, wherein the surface-active compound is present in a proportion of from 1% to 10% of the weight of monomer taken.

8. A process as claimed in any one of claims 1 to 7, wherein the azo polymerisation initiator exhibits a distribution ratio between water and pure styrene of at least 12.

9. A process as claimed in claim 8, wherein the initiator is the bis(diethanolamide) or bis(diisopropanolamide) of 4,4'-azobis(cyanopentanoic acid).

10. A process as described in any one of claims 1 to 9, wherein the azo initiator is used in an amount of from 0.1 mol% to 3.0 mol.% of the amount of monomer.

**Patentansprüche**

1. Verfahren zur Herstellung einer sterisch stabilisierten wäßrigen Polymerdispersion, bei welchem (I) mindestens ein ethylenisch ungesättigtes Monomer, das in Wasser eine Löslichkeit im Bereich von 0,08 bis 8 Gew.-% aufweist, aber zu einem in Wasser unlöslichen Polymer Anlaß gibt, in Wasser in Gegenwart einer nichtionischen oberflächenaktiven Verbindung emulgiert wird, welche im Molekül (a) eine Komponente mit einem Molekulargewicht von mindestens 400, die per se in der wäßrigen Phase löslich ist, (b) eine weitere Komponente mit einem Molekulargewicht im Bereich von 150 bis 1000, die per se in der Monomerphase löslich ist, und (c) eine ungesättigte Gruppierung, die zur Copolymerisation mit dem Monomer oder den Monomeren fähig ist, enthält, wobei diese Gruppierung an die oben erwähnte monomerlösliche Komponente geknüpft oder mit dieser integral verbunden ist, und (II) hierauf das emulgierte Monomer in zusätzlicher Gegenwart eines nichtionischen, radikalischen organischen Azopolymerisationsinitiators, der in Wasser löslich und in dem Monomer oder den Monomeren weitgehend unlöslich ist, der Polymerisation unterworfen wird.

2. Verfahren nach Anspruch 1, bei welchem die in der wäßrigen Phase lösliche Komponente der oberflächenaktiven Verbindung sich von einem Polyethylenglycol mit einem Molekulargewicht im Bereich von 2000 bis 4000 oder einem Monomethylether davon ableitet.

3. Verfahren nach Anspruch 1 oder 2, bei welchem das Gewichtsverhältnis der oberflächenaktiven Verbindung der in der wäßrigen Phase löslichen Komponente zu der in der Monomerphase löslichen Komponente im Bereich von 20:1 bis 1:1 liegt.

4. Verfahren nach einem der Ansprüche 1 bis 3, bei welchem die oberflächenaktive Verbindung ein Blockcopolymer der Formel

$$CH_3O(C_2H_4O)_x(C_4H_8O)_yCO.\overset{\overset{\displaystyle CH_3}{|}}{C}=CH_2$$

ist, worin x und y die Werte haben, die Poly(oxyethylen)- und Poly(oxybutylen)-Blockmolekülgewichten von 2000 bzw. 700 entsprechen.

5. Verfahren nach einem der Ansprüche 1 bis 3, bei welchem die oberflächenaktive Verbindung ein Blockcopolymer der Formel

$$CH_2{=}CH.CH_2O(C_4H_8O)_y(C_2H_4O)_xH$$

ist, worin x und y die Werte haben, die Poly(oxyethylen)- und Poly(oxybutylen)-Blockmolekülgewichten von 2000 bzw. 700 entsprechen.

6. Verfahren nach einem der Ansprüche 1 bis 3, bei welchem die oberflächenaktive Verbindung das Produkt der aufeinanderfolgenden Kondensation von 1 mol Triallylether von Pentaerythrit mit 2 mol Butylenoxid und 35 mol Ethylenoxid ist.

7. Verfahren nach einem der Ansprüche 1 bis 6, bei welchem die oberflächenaktive Verbindung in einem Anteil von 1 bis 10%, bezogen auf das Gewicht des eingesetzten Monomers, vorliegt.

8. Verfahren nach einem der Ansprüche 1 bis 7, bei welchem der Azopolymerisationsinitiator ein Verteilungsverhältnis zwischen Wasser und reinem Styrol von mindestens 12 zeigt.

9. Verfahren nach Anspruch 8, bei welchem der Initiator aus dem Bis(diethanolamid) oder Bis(diisopropanolamid) von 4,4'-Azobis(cyanopentansäure) besteht.

10. Verfahren nach einem der Ansprüche 1 bis 9, bei welchem der Azoinitiator in einer Menge von 0,1 bis 3,0 mol-%, bezogen auf die Monomermenge, verwendet wird.

**Revendications**

1. Procédé de préparation d'une dispersion aqueuse de polymère stabilisée stériquement, dans lequel (i) au moins un monomère éthyléniquement insaturé, ayant une solubilité dans l'eau de l'intervalle de 0,08—8% en poids mais donnant naissance à un polymère qui est insoluble dans l'eau, est émulsionné dans de l'eau en présence d'un composé surfactif non ionique dont la molécule comprend (a) un composant d'un poids moléculaire d'au moins 400 qui est par lui-même soluble dans la phase aqueuse, (b) un autre composant d'un poids moléculaire de l'intervalle de 150—1000 qui est par lui-même soluble dans la phase de monomère et (c) un groupement insaturé qui est capable de copolymérisation avec le monomère ou les monomères, ce groupement étant uni au composant précité soluble dans le monomère ou en faisant partie intégrante et (ii) le monomère émulsionné est ensuite soumis à la polymérisation en la

présence supplémentaire d'un initiateur de polymérisation azoïque organique de type radicalaire libre non ionisable qui est soluble dans l'eau et sensiblement insoluble dans le monomère ou les monomères.

2. Procédé suivant la revendication 1, dans lequel le composant soluble dans la phase aqueuse du composé surfactif est issu d'un polyéthylèneglycol ou d'un éther monométhylique de celui-ci, d'un poids moléculaire de l'intervalle de 2000—4000.

3. Procédé suivant la revendication 1 ou 2, dans lequel le rapport pondéral, dans le composé surfactif, du composant soluble dans la phase aqueuse au composant soluble dans la phase de monomère se situe dans l'intervalle de 20:1 à 1:1.

4. Procédé suivant l'une quelconque des revendications 1 à 3, dans lequel le composé surfactif est un copolymère séquencé de formule:

$$CH_3O(C_2H_4O)_x(C_4H_8O)_yCO.\overset{CH_3}{\overset{|}{C}}=CH_2$$

où x et y ont des valeurs correspondant à des poids moléculaires des séquences de poly(oxyéthylène) et de poly(oxybutylène) de 2000 et 700 respectivement.

5. Procédé suivant l'une quelconque des revendications 1 à 3, dans lequel le composé surfactif est un copolymère séquencé de formule:

$$CH_2=CH.CH_2O(C_4H_8O)_y(C_2H_4O)_xH$$

où x et y ont des valeurs correspondant à des poids moléculaires des séquences de poly(oxyéthylène) et de poly(oxybutylène) de 2000 et 700 respectivement.

6. Procédé suivant l'une quelconque des revendications 1 à 3, dans lequel le composé surfactif est le produit de la condensation successive de 1 mole de l'éther triallylique du pentaérythritol avec 2 moles d'oxyde de butylène et 35 moles d'oxyde d'éthylène.

7. Procédé suivant l'une quelconque des revendications 1 à 6, dans lequel le composé surfactif est présent en une proportion de 1 à 10% du poids de monomère utilisé.

8. Procédé suivant l'une quelconque des revendications 1 à 7, dans lequel l'initiateur de polymérisation azoïque manifeste un rapport de partage entre l'eau et le styrène pur d'au moins 12.

9. Procédé suivant la revendication 8, dans lequel l'initiateur est le bis(diéthanolamide) ou le bis(diisopropanolamide) de l'acide 4,4'-azobis(cyanopentanoïque).

10. Procédé suivant l'une quelconque des revendications 1 à 9, dans lequel l'initiateur azoïque est utilisé en une quantité de 0,1 mole % à 3,0 moles % de la quantité de monomère.